# EUROPEAN PATENT APPLICATION

(11) **EP 2 177 457 A1**
(43) Date of publication of application: **21.04.2010**
(21) Application number: 08425671.8
(22) Date of filing: 16.10.2008
(51) Int. Cl.: B65D 81/20, B65D 81/34, A47J 36/02

(54) **Vacuum container**

(71) Applicant: Gio' Style Lifestyle S.p.A., 24059 Urgnano (BG) (IT)
(72) Inventor: Alito, Giuseppe, 20133 Milano (MI) (IT)
(74) Representative: Trupiano, Federica

(57) **Abstract**

Container for the cooking and/or reheating and/or conservation of food comprising a main body, a lid and at least one combined system for creating vacuum and/or regulating the humidity and/or internal pressure, comprising at least one valve and at least one housing, in which said valve (V) can assume at least one vacuum position, one microwave position and one cleaning position.

## Description

The present invention concerns a container for the conservation and/or cooking of foodstuffs, in particular the cooking or reheating of food in a microwave oven and/or for its conservation under vacuum and/or in a freezer and/or refrigerator. This container is equipped with a closure device or lid having a combined system for the complete or partial removal of air in contact with the food and/or for adjusting the humidity and/or internal pressure.

Various types of container for the conservation and/or cooking/reheating of food are available on the market.

In fact, hermetic containers that are equipped with a regulator valve for internal overpressure, containers with simple openings suitable for directly exchanging air with the external environment and containers with systems for creating vacuum, thus increasing the period of conservation, are known.

Containers with openings and/or valves, having different shapes and made of different materials according to usage, are described in various documents of the known art.

Examples of containers provided with regulator valves for internal overpressure and/or for exchanging air with the external environment are provided in MXPA03004516, US5974686 and US6035769.

MXPA03004516 patent application discloses is a container for cooking and reheating food in a microwave oven, composed of a container with a lid provided with a valve for discharging any gases that might be created inside the container during use. The vent valve is fixed to the lid with a pin so as to allow manual opening and closing as required.

US5974686 and US6035769 patents describe a hermetic container, permeable to microwaves, equipped with a lid with a control valve for discharging gases to the outside. The container has a lid with a control valve that allows gases inside the container to be removed through a vent hole. The steam generated from heating the water contained in the food and the air present in the container can escape to the outside through the hole, which is then closed by the valve due to the internal drop in pressure, thereby allowing the closure of the container. The valve is not deformable and can move rigidly inside the vent hole.

Examples also exist of containers provided with a valve to which it is necessary to connect an external pump to extract the air and create the vacuum.

EP 1700551 patent application describes a container equipped with an aeration/vent valve and closed via an airtight cover. The aeration/vent valve is positioned in the area of one of the handles, which is provided with a release device for moving the airtight cover away from the aeration/vent valve, thanks to which the airtight cover is forcedly moved away before the handle is opened.

The vacuum inside the container is created by applying pressure on the lid and forcing the air out through the aeration/vent valve. Vice versa, by operating the release device, the airtight cover separates from the aeration/vent valve and air enters the container, creating the same pressure conditions as on the outside.

Nevertheless, the containers in the above-mentioned patents or patent applications present several drawbacks.

In fact, the valves present on containers for cooking/reheating in microwave ovens and/or conservation generally have the function of expelling gases that might form inside and/or that of allowing adequate air exchange with outside environment, but are not designed for creating vacuum.

Instead, the containers that have valves designed to allow creation of vacuum in addition to expelling gases due to cooking/reheating and allowing air exchange with the outside, do not guarantee adequate safety and practicality. These types of valve can in fact easily close themselves during microwave cooking, blocking the only gas outlet hole and so possibly causing explosions.

The object of the present invention is that of providing a container that can satisfy the requirements of regulating possible internal overpressures in the case of cooking or reheating the food it contains, in a microwave oven for example, can guarantee adequate air exchange in the case of simple food conservation in a controlled environment (in refrigerator for example) and can allow to create vacuum in order to extend the food's period of conservation.

Another object of the present invention is that of providing a container that allows cooking or reheating in a microwave oven while keeping the lid on and guarantees uniform heat distribution.

A further object of the present invention is to provide a food container equipped with a valve that can be easily removed from its housing to allow thorough cleaning after use.

Another object of the present invention is that of providing a food container equipped with a valve that has at least two positions in which it is possible for air to enter the container, once the vacuum has been created.

These and other objects of the invention and the associated advantages, which will become clearer from the description that follows, are achieved with a container for the cooking and/or reheating and/or conservation of food comprising a main body, a lid and at least one combined system for creating vacuum and/or for regulating the humidity and/or internal pressure according to claim 1.

In particular, internal pressure or overpressure is intended as pressure generated inside the container, for example due to the formation of steam deriving from the cooking or reheating of food, that is different from the external pressure.

The container forming the subject of the present invention resolves the problem of guaranteeing appropriate under vacuum conservation of foods, adequate safety during the cooking/reheating of food and high practicality in cleaning, by using a single container with a lid provided with a combined system for creating vacuum and/or regulating the humidity and/or internal pressure. The combined system, which comprises at least one valve and at least one housing, made in the lid and suitable for accepting the valve, is designed so as to allow the valve to assume at least one vacuum position, at least one microwave position and at least one cleaning position.

In particular, the regulator valve according to the present invention has a structure preferably made of a rigid plastic material, such as polypropylene for example, in which elements are inserted that are made of an elastically flexible plastic material, such as silicone for example, which guarantees good adhesion to the surfaces, high deformability and is inert for foodstuff constituents.

The container is usefully made of a rigid plastic material, polypropylene for example, which is currently certified for contact with foodstuffs.

The lid is made of a rigid plastic material, polycarbonate for example, which is light, transparent, resistant to thermal shocks and currently certified for contact with foodstuffs.

The container according to the present invention is preferable made using the traditional method of plastic moulding, with the consequent advantage of employing a single die and also a consequent advantage regarding costs.

According to one advantageous aspect, the container of the invention has a valve that can turn in a housing in the lid, assuming a microwave position, a vacuum position or a cleaning position.

According to another advantageous aspect, the container forming the subject of the invention is provided with a valve that has at least two positions for regulating the humidity and/or internal pressure.

According to a further advantageous aspect, the container forming the subject of the invention has a valve that is inserted in the lid in a manner independent of the container's fastening or closure system.

An illustrative but not limitative example of a food container provided with a combined system for creating a vacuum and/or regulating the humidity and/or internal pressure is described below with reference to the enclosed figures, where:
- Figure 1 is a perspective view of the components of a food container according to the invention,
- Figure 2 is a perspective view of the components of a valve according to the invention,
- Figure 3 is a perspective view of the valve according to the invention;
- Figure 4 shows two perspective views of the valve according to the invention with the valve cover raised with respect to the valve body,
- Figure 5 is a perspective view of the valve, whistle, seal, lid, fastening flaps and lid seal according to the invention,
- Figure 6 is a perspective view of the valve and the lid with the valve housing according to the invention,
- Figure 7 is a top view of the container according to the invention with the valve in the vacuum position,
- Figure 8 is a top view of the container according to the invention with the valve in the reheating/cooking position,

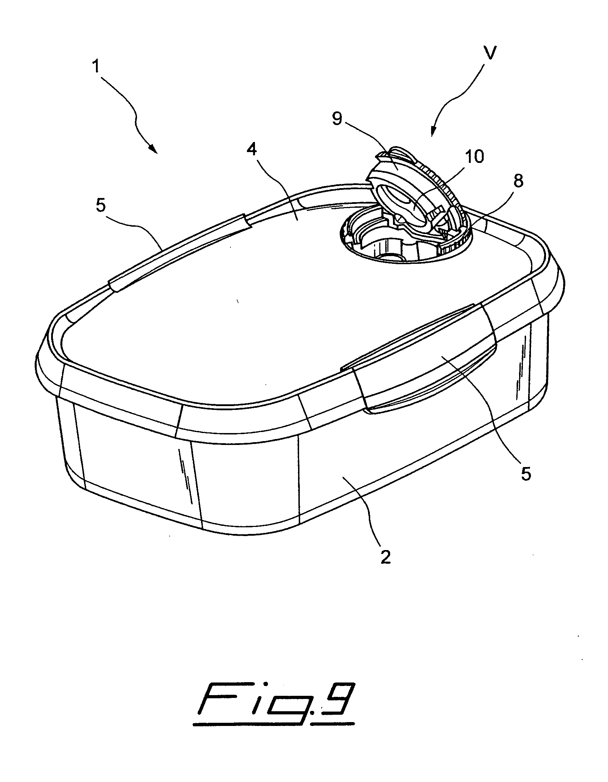

- Figure 9 is a perspective view of the container according to the invention with the valve cover raised in an alternative vent position,
- Figure 10 is a perspective view of the container according to the invention with the lid removed from the base, and
- Figure 11 is a perspective view of the container according to the invention with the lid in the closed position.

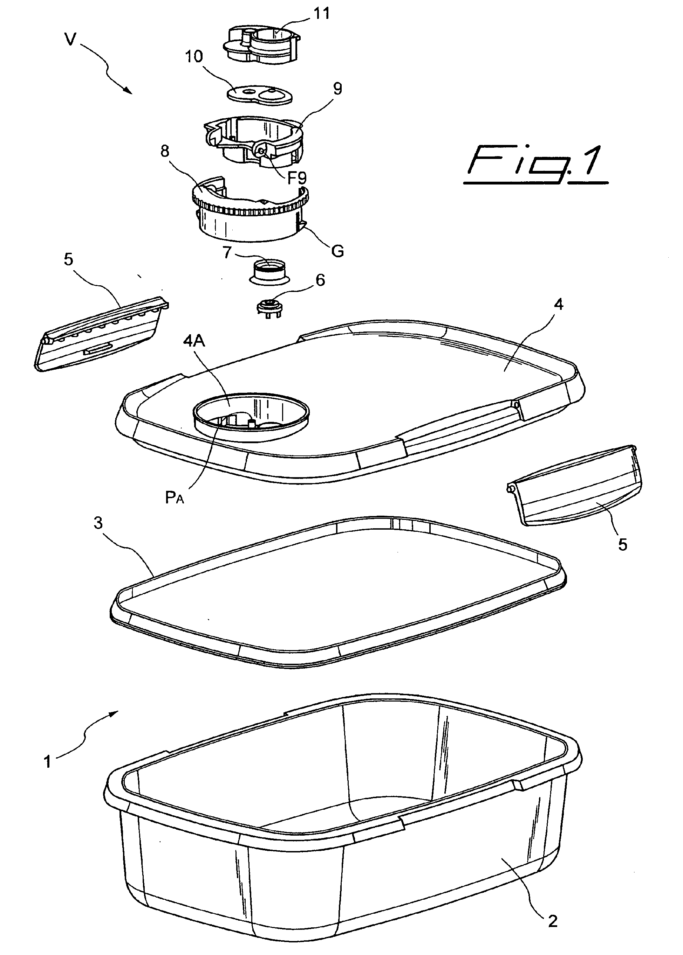

A preferred embodiment of the container (1) forming the subject of the present invention is shown in Figure 1 and comprises a main body (2), a closure device or lid (4), equipped with a housing (4A), and a regulator valve (V). To ensure hermetic sealing of the container, a seal (3) is inserted between the lid (4) and the main body (2) of said container (1), while two fastening flaps (5) are used to lock the lid (4) directly to the main body (2).

In particular, the housing (4A) is equipped with a pin (P_{A}) around which the valve (V) turns, a hole (F_{A}) on which a whistle (6) and a seal (7) are mounted before insertion of the valve (V), and at least two sliding seats (S_{A}), each provided with at least two projections (R_{A}).

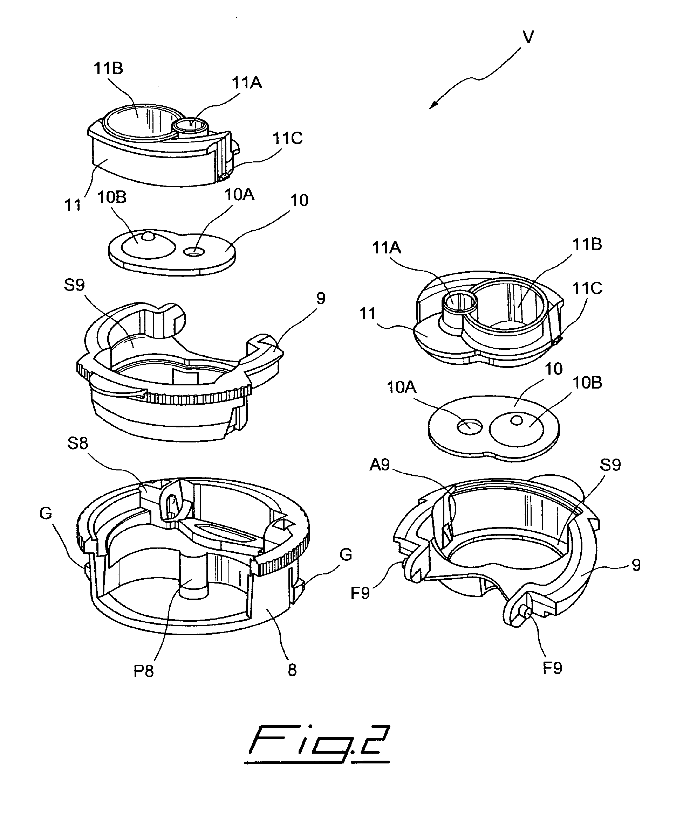

Figure 2 shows all the components of the valve (V) according to the preferred embodiment of the invention. Said valve (V) comprises a valve body (8), a valve cover (9), a diaphragm seal (10) and a diaphragm lid (11).

The valve body (8) is equipped with at least two housings (S8), at least two engagement lugs (G), able to slide in the seats (S_{A}) of the housing (4A), and a housing (P8) suitable for insertion on the pin (P_{A}) of the housing (4A) to ensure the rotation of said valve body (8), and therefore of all the components of the valve (V), around said pin (P_{A}).

The valve cover (9) is equipped with a seat (S9) for the housing of the diaphragm seal (10), at least two projections (A9) for locking the diaphragm lid (11) and at least two pins (F9), suitable for engaging the seats (S8) of the valve body (8) and thereby ensuring rotation of the valve cover (9) about an axis passing through said pins (F9).

The diaphragm seal (10), designed to have a hole (10A) and a domed portion (10B) in a single piece, is inserted in the seat (S9) of the valve cover (9) and is kept in position by the diaphragm lid (11). The diaphragm lid (11) is equipped with at least two engagement lugs (11 C) that, by engaging with the projections (A9) of the seat (S9), permit its locking inside the valve cover (9). The diaphragm lid (11) is equipped with an opening (11A) in correspondence to the hole (10A) and an opening (11 B) in correspondence to the domed portion (10B) of the diaphragm seal (10).

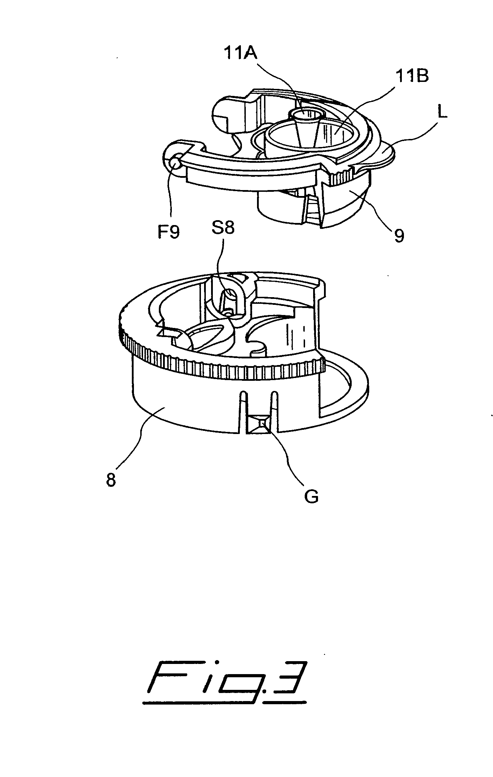

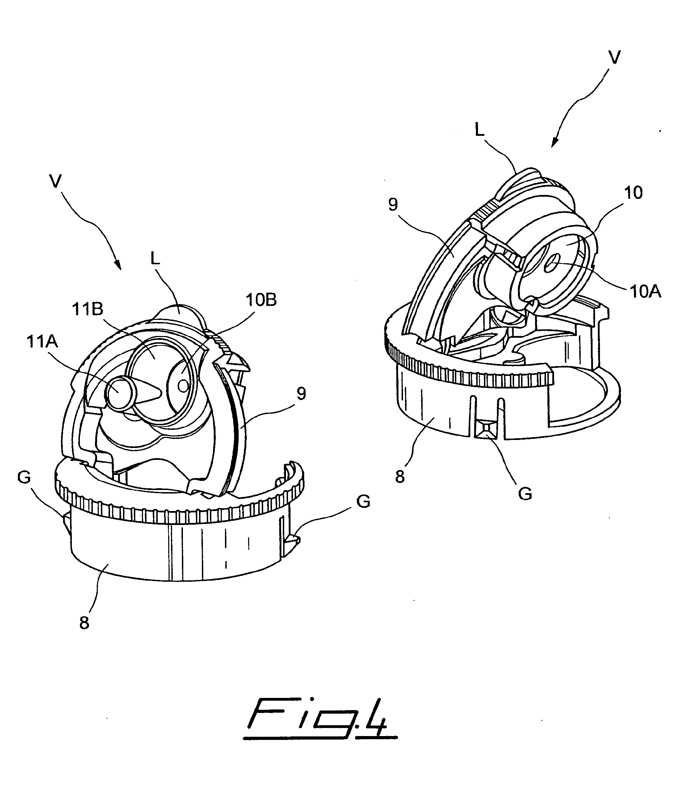

The valve cover (9), on which the diaphragm seal (10) and the diaphragm lid (11) are inserted, is movably mounted on the valve body (8), as shown in Figures 3 and 4. The pins (F9) of the valve cover (9) are engaged inside the housings (S8) of the valve body (8) in order to allow movement of the valve cover (9) with respect to the valve body (8) about an axis of rotation passing through the two pins (F9). This mechanism allows the valve cover (9) to be lifted at any time by levering the tab (L) integral with said valve cover (9).

In particular, the valve cover (9) can be lifted when the valve (V) is in the vacuum position to allow air to re-enter the container without moving said valve to the microwave position.

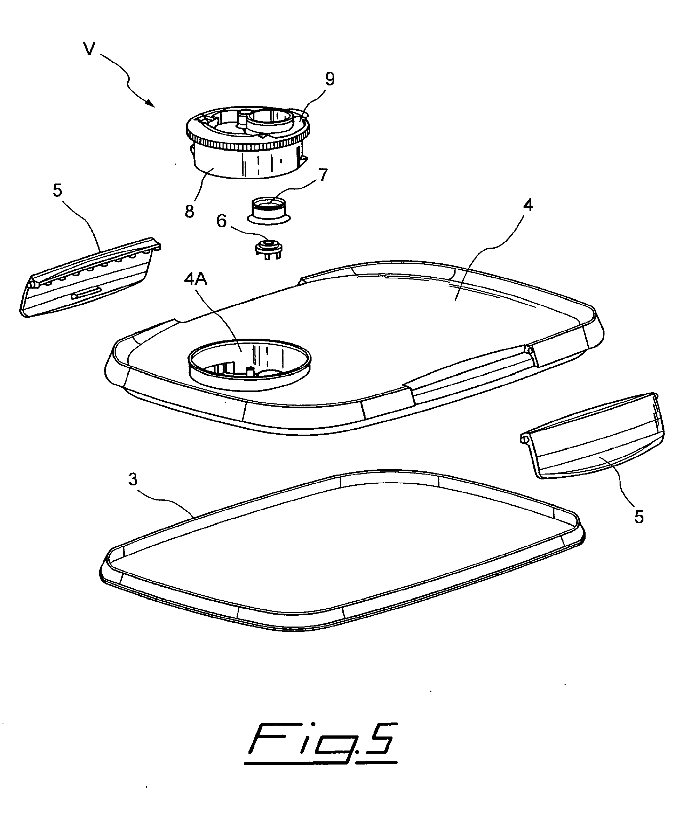

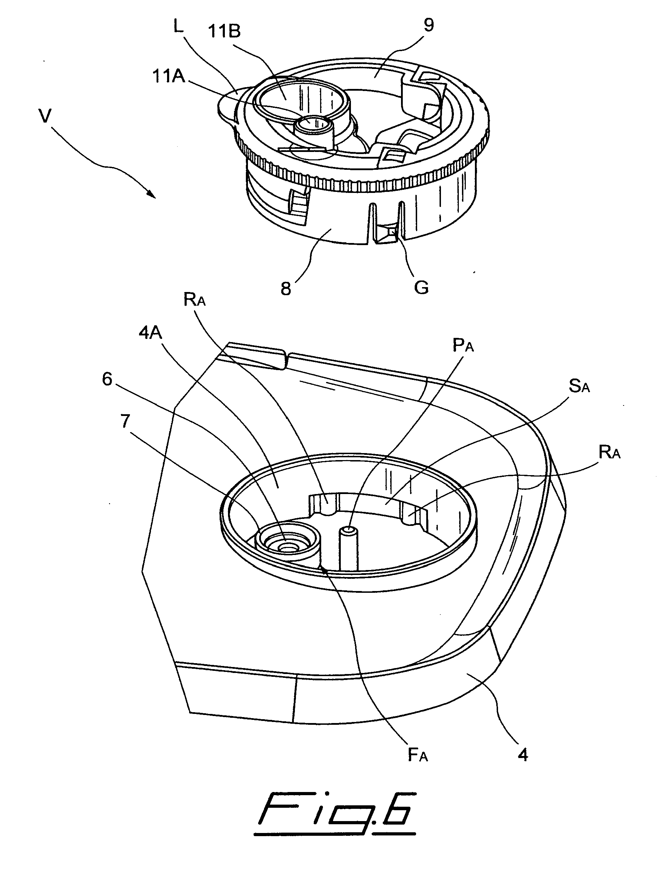

Figure 5 and Figure 6 show the assembled valve (V) and the lid (4) with the housing (4A) in which said valve (V) is inserted.

In the housing (4A), the pin (P_{A}) functions as a fulcrum for rotation of the valve body (8) and thus the entire valve (V), while the hole (F_{A}) is the seat for the whistle (6) and the seal (7). If the container is under vacuum, the function of the whistle (6) is to warn the user with a hissing sound the moment in which outside air enters the container, cancelling the vacuum condition.

The valve body (8) is placed in the housing (4A) such that the pin (P_{A}) is inserted in the housing (P8), thereby allowing rotation of the valve (V), and the engagement lugs (G) are positioned inside the seats (S_{A}) of housing (4A) so as to lock the valve (V) in position. The engagement lugs (G) slide in the seats (S_{A}) during rotation of the valve (V) inside the housing (4A). The valve (V) can occupy at least three positions during its rotation: a vacuum position, a microwave cooking/reheating position and a cleaning position.

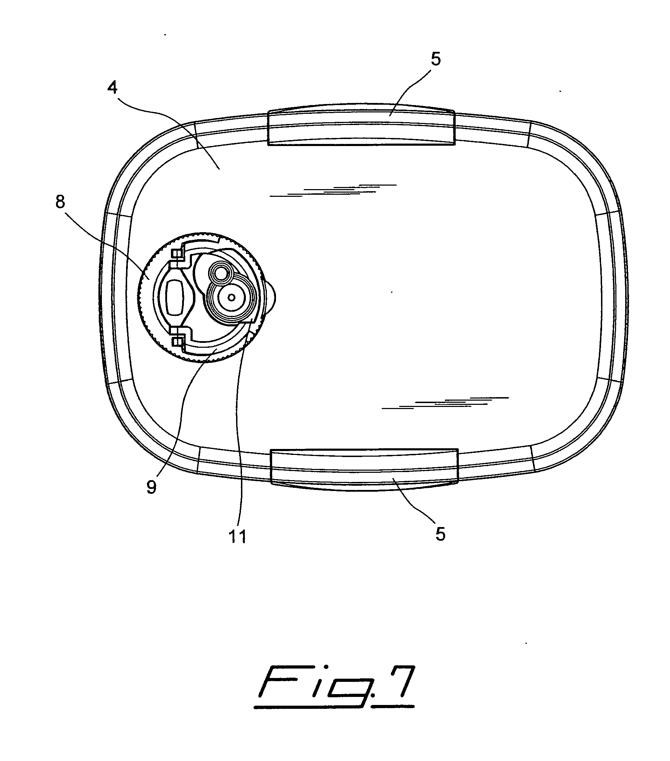

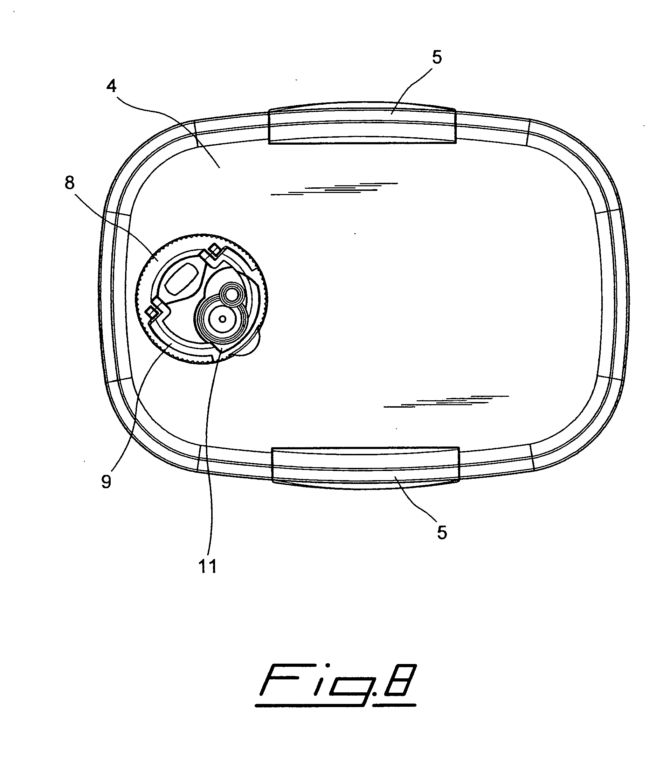

Figures 7 and 8 show two views from above of the container according to the invention, with the valve in the vacuum position and in the reheating/cooking position respectively. In the vacuum position, the valve (V) is turned such that the hole (F_{A}), equipped with whistle (6) and seal (7), is aligned with the domed portion (10B) of the diaphragm seal (10). When the user presses on the lid (4), after having locked it onto the base (2) via the fastening flaps (5), the air held inside the container is partially or completely discharged from the hole (F_{A}), creating a depression that causes the domed portion (10B) to adhere to it, blocking the opening of said hole (F_{A}) and therefore maintaining the vacuum condition that was created inside the container by the partial or complete discharge of air.

Instead, in the reheating/cooking position, the valve (V) is turned such that the hole (F_{A}) is aligned with the hole (10A) of the diaphragm seal (10). In this position, when the container is used for the cooking or reheating food in a microwave oven, any gases that might form following evaporation of the water contained in the food can be discharged through hole (F_{A}).

The valve (V) can be turned still further to a cleaning position to allow the valve to be removed for thorough cleaning. This position is reached by forcing the valve (V) so that the engagement lugs (G), in going beyond the projections (R_{A}), come out of the seats (S_{A}) of the housing (4A), thereby allowing the valve to be released and cleaned with care.

As already mentioned previously, in addition to being able to be turned to at least three different positions, the valve (V) is designed so that the valve cover (9) can be lifted with respect to the valve body (8). This characteristic enables the user to remove the vacuum condition in two different ways:
- Lifting the valve cover (9) via the tab (L), when the valve (V) is in the vacuum position, and
- Turning the valve (V) to the microwave position, in which there is direct communication with the external environment.

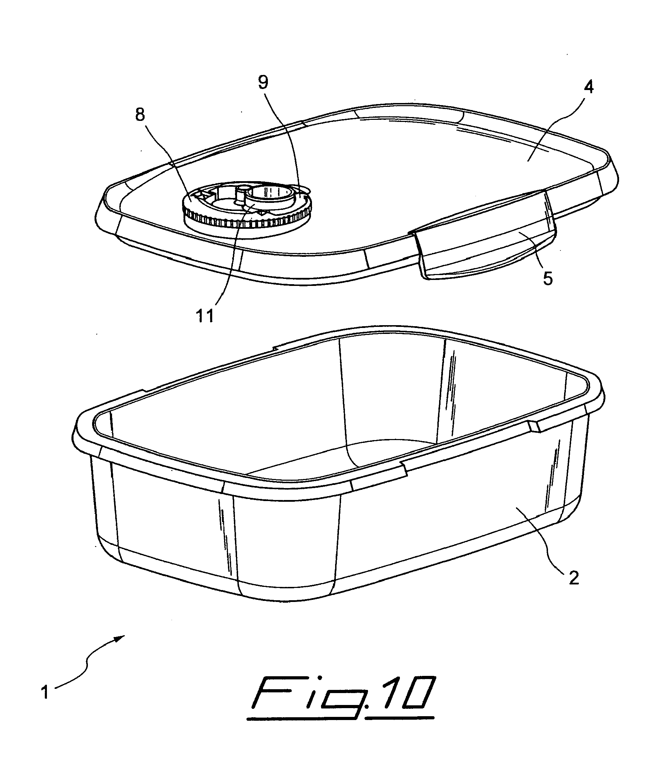

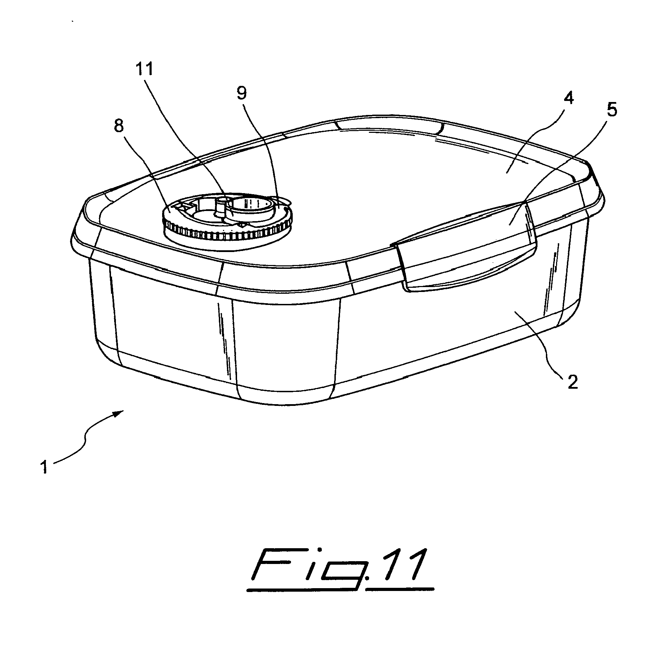

Figures 10 and 11 show the closure of the container (1).

Once put on the base (2), the lid (4) is locked via the fastening flaps (5). The user can turn the valve (V) to at least three positions according to requirements.

In the case of food conservation, the user positions the valve (V) in the vacuum position, presses on the lid and partially or completely removes the air present in the container through the hole (F_{A}). In this position, the vacuum condition can be eliminated by lifting the valve cover (9) with respect to the valve body (8) and allowing air to come in. A hissing sound is made when the air passes through the whistle (6) as it enters the container.

In the case of microwave reheating/cooking, the user positions the valve (V) in the reheating/cooking position, thereby ensuring that gases deriving from the evaporation of water contained in the food can be removed without the possibility of causing explosions.

To clean the valve and the housing, the user only needs to turn the valve (V) so that the engagement lugs (G) of the valve body (8) come out of their sliding seats (S_{A}) in the housing (4A), thereby allowing the entire valve to be removed.

The container and the container lid are made of a plastic material currently certified for contact with foodstuffs, such as polypropylene and/or polycarbonate for example, and in any case a material suitable for use both in a microwave oven and in a refrigerator/freezer. The components of the regulator valve made of a rigid plastic material, namely the valve body (8), the valve cover (9) and the diaphragm lid (11), are preferably made of polypropylene.

The seal (3) positioned between the lid (4) and the main body (2), the seal (7) positioned on the whistle (6) and the diaphragm seal (10) are made of an elastically flexible plastic material, silicone for example, so as to ensure high deformability and immunity to attack by foodstuff constituents.

## Claims

1. Container (1) for the cooking and/or reheating and/or conservation of food comprising a main body (2), a lid (4) and at least one combined system for creating a vacuum and/or regulating the humidity and/or internal pressure comprising at least one valve (V) and at least one housing (4A), made in the lid (4), suitable for accepting said at least one valve (V), **characterized in that** said valve (V) can assume at least one vacuum position, one microwave position and one cleaning position.

2. Container (1) according to claim 1 **characterized in that** said valve (V) is equipped with at least two positions for regulating humidity and/or internal pressure.

3. Container according to claims 1 and 2 **characterized in that** said valve (V) comprises a valve body (8), a valve cover (9), a diaphragm seal (10) and a diaphragm lid (11).

4. Container (1) according to claim 1 **characterized in that** said housing (4A) is provided with at least one pin (P_{A}), at least one hole (F_{A}) and at least two sliding seats (S_{A}), each equipped with at least two projections (R_{A}).

5. Container according to claim 3 **characterized in that** said valve body (8) is equipped with at least two housings (S8), at least two engagement lugs (G), able to slide in the seats (S_{A}), and a housing (P8) suitable for being engaged on the pin (P_{A}) to ensure the rotation of said valve body (8) about said pin (P_{A}).

6. Container according to claim 3 **characterized in that** said valve cover (9) is equipped with a seat (S9) for housing the diaphragm seal (10), at least two projections (A9) for locking the diaphragm lid (11) and at least two pins (F9), suitable for engaging in the seats (S8) of the valve body (8) and ensuring the rotation of the valve cover (9) about an axis passing through said pins (F9).

7. Container according to claim 1, **characterized in that** said main body (2) and said lid are made of a plastic material, such as polypropylene, polycarbonate.

8. Container according to claims 1 and 7, **characterized in that** said lid (4) is made of a transparent material.

9. Container according to claims 3 and 7, **characterized in that** said valve body (8), said valve cover (9) and said diaphragm lid (11) are made of a plastic material, such as polypropylene, polycarbonate.

10. Container according to claim 3, **characterized in that** said diaphragm seal (10) is made of an elastically flexible plastic material.

11. Use of the container according to the previous claims for the cooking, the reheating and/or the conservation of food.
